(19) Europäisches Patentamt
European Patent Office
Office européen des brevets

(11) **EP 3 181 534 A1**

(12) **EUROPEAN PATENT APPLICATION**
published in accordance with Art. 153(4) EPC

(43) Date of publication:
**21.06.2017 Bulletin 2017/25**

(21) Application number: **15832562.1**

(22) Date of filing: **13.08.2015**

(51) Int Cl.:
*C03C 27/12* (2006.01)     *B60J 1/00* (2006.01)

(86) International application number:
**PCT/JP2015/072914**

(87) International publication number:
**WO 2016/024625 (18.02.2016 Gazette 2016/07)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **15.08.2014 JP 2014165599**

(71) Applicant: **Nippon Sheet Glass Company, Limited
Tokyo 108-6321 (JP)**

(72) Inventors:
• **KANKI, Satoshi
  Tokyo 108-6321 (JP)**
• **ASAI, Takahiro
  Tokyo 108-6321 (JP)**

(74) Representative: **Webster, Jeremy Mark et al
Mewburn Ellis LLP
City Tower
40 Basinghall Street
London EC2V 5DE (GB)**

(54) **LAMINATED GLASS**

(57) The present invention provides a laminated glass to be used in a windshield of an automobile, and the laminated glass includes: an outer glass sheet; an inner glass sheet arranged opposite to the outer glass sheet, the inner glass sheet having a smaller thickness than that of the outer glass sheet; and an interlayer sandwiched between the outer glass sheet and the inner glass sheet. The interlayer includes at least a core layer and a pair of outer layers between which the core layer is sandwiched, the outer layers having a higher rigidity than that of the core layer. An attachment angle to the vertical with respect to the automobile is 45 degrees or more. The core layer has a Young's modulus of 1 to 25 MPa at a frequency of 100 Hz and a temperature of 20°C.

Fig. 1

**Description**

Technical Field

The present invention relates to a laminated glass to be used in a windshield of an automobile.

Background Art

Weight reduction of glass panels for windshields and the like to be installed in automobiles has recently been in demand from the viewpoint of improving the fuel consumption of automobiles, and to meet this demand, glass panels having a small thickness have undergone development. However, a reduction in thickness causes a decrease in sound insulation performance, and thus there is a problem in that sound occurring outside a vehicle enters the interior of the vehicle, deteriorating the environment in the vehicle. In order to solve this problem, for example, Patent Literature 1 discloses a laminated glass for an automobile that maintains the sound insulation performance at a predetermined frequency while having a decreased surface density. This laminated glass includes a pair of glass sheets and a resin interlayer that is arranged between the glass sheets.

Citation List

Patent Literature

Patent Literature 1: JP 2002-326847A

Summary of Invention

Technical Problem

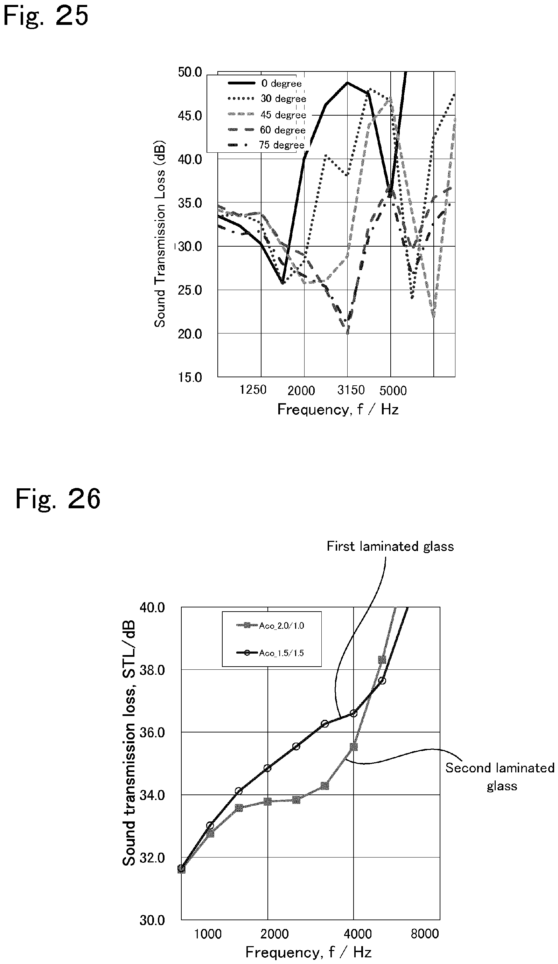

Generally, a windshield is attached to an automobile in an inclined manner, and the inventors of the present invention found that the larger the attachment angle of the windshield is, the lower the sound insulation performance is. FIG. 25 is a graph showing the results of a simulation of a relationship between frequency and sound transmission loss (STL). This graph shows the results of a simulation performed by using a laminated glass constituted by two glass sheets having the respective thicknesses of 2.0 mm and 1.5 mm and a resin interlayer sandwiched between the glass sheets and setting the attachment angle to the vertical at five angles between 0 to 75 degrees. It can be seen from this graph that when the attachment angle is larger than 45 degrees, sound transmission loss decreases in a frequency range from 2500 to 5000 Hz, which humans can easily hear. This causes a problem in that the sound insulation performance decreases, thus resulting in the deterioration of the environment in the vehicle.
The present invention was made in order to solve the foregoing problems, and it is an object thereof to provide a laminated glass that can suppress the decrease in sound insulation performance even if the attachment angle is 45 degrees or more.

Solution to Problem

Invention 1

As a result of intensive research to solve the foregoing problems, the inventors of invention 1 found that the smaller the Young's modulus of a core was, the higher the sound insulation performance was. In particular, they found that although the sound insulation performance in a range from 2500 to 5000 Hz, particularly near 3150 Hz, decreased when the attachment angle of the laminated glass exceeded 45 degrees, reducing the Young's modulus of the core improved the sound insulation performance in the same frequency range as the frequency range in which the sound insulation performance decreased due to the attachment angle being increased. As a result of further research based on these findings, invention 1 was achieved. That is, invention 1 provides a laminated glass with the following aspects.
Aspect 1 is a laminated glass to be used in a windshield of an automobile, the laminated glass including:

an outer glass sheet;
an inner glass sheet arranged opposite to the outer glass sheet; and
an interlayer sandwiched between the outer glass sheet and the inner glass sheet,
wherein the interlayer includes at least a core layer and a pair of outer layers between which the core layer is sandwiched, the outer layers having a higher rigidity than that of the core layer,

an attachment angle to the vertical with respect to the automobile is 45 degrees or more, and

the core layer has a Young's modulus of 1 to 25 MPa at a frequency of 100 Hz and a temperature of 20°C.

Aspect 2 is the laminate glass according to aspect 1, wherein the outer layers have a Young's modulus of 560 MPa or more at a frequency of 100 Hz and a temperature of 20°C.

Aspect 3 is the laminated glass according to aspect 1 or 2, wherein the inner glass sheet has a thickness of 0.6 to 1.8 mm.

Aspect 4 is the laminated glass according to any one of aspects 1 to 3, wherein the outer glass sheet has a thickness of 1.8 to 5.0 mm.

Aspect 5 is the laminated glass according to any one of aspects 1 to 4, wherein the core layer has a thickness of 0.1 to 2.0 mm.

Aspect 6 is the laminated glass according to any one of aspects 1 to 5, wherein the inner glass sheet has a smaller thickness than that of the outer glass sheet.

Aspect 7 is the laminated glass according to any one of aspects 1 to 6, wherein the attachment angle is 60 degrees or more.

Invention 2

As a result of intensive research to solve the foregoing problems, the inventors of invention 2 found that the larger the thickness of the core layer was, the higher the sound insulation performance was. In particular, they found that although the sound insulation performance in a range from 2500 to 5000 Hz, particularly near 3150 Hz, decreased when the attachment angle of the laminated glass exceeded 45 degrees, increasing the thickness of the core layer improved the sound insulation performance in the same frequency range as the frequency range in which the sound insulation performance decreased due to the attachment angle being increased. As a result of further research based on these findings, invention 2 was achieved. That is, invention 2 provides a laminated glass with the following aspects.

Aspect 1 is a laminated glass to be used in a windshield of an automobile, the laminated glass including:

an outer glass sheet;

an inner glass sheet arranged opposite to the outer glass sheet; and

an interlayer sandwiched between the outer glass sheet and the inner glass sheet,

wherein the interlayer includes at least a core layer and a pair of outer layers between which the core layer is sandwiched, the outer layers having a higher rigidity than that of the core layer,

an attachment angle to the vertical with respect to the automobile is 45 degrees or more, and

the core layer has a thickness of 0.1 mm or more.

Aspect 2 is the laminated glass according to aspect 1, wherein a difference in thickness between the outer glass sheet and the inner glass sheet is 0.9 mm or more.

Aspect 3 is the laminated glass according to aspect 1 or 2, wherein the core layer has a Young's modulus of 1 to 25 MPa at a frequency of 100 Hz and a temperature of 20°C.

Aspect 4 is the laminated glass according to any one of aspects 1 to 3, wherein the inner glass sheet has a thickness of 0.6 to 1.8 mm.

Aspect 5 is the laminated glass according to any one of aspects 1 to 4, wherein the outer glass sheet has a thickness of 1.8 to 5.0 mm.

Aspect 6 is the laminated glass according to any one of aspects 1 to 5, wherein the core layer has a thickness of 0.1 to 2.0 mm.

Aspect 7 is the laminated glass according to any one of aspects 1 to 6, wherein the inner glass sheet has a smaller thickness than that of the outer glass sheet.

Aspect 8 is the laminated glass according to any one of aspects 1 to 7, wherein the attachment angle is 60 degrees or more.

Invention 3

As a result of intensive research to solve the foregoing problems, the inventors of invention 3 found that the more largely a center line in the vertical direction of the laminated glass was curved, the lower the sound insulation performance was. As a result of further research based on these findings, invention 3 was achieved. That is, invention 3 provides a laminated glass with the following aspects.

Aspect 1 is a laminated glass to be used in a windshield of an automobile, the laminated glass including:

an outer glass sheet;

an inner glass sheet arranged opposite to the outer glass sheet; and

an interlayer sandwiched between the outer glass sheet and the inner glass sheet,

wherein the interlayer includes at least a core layer and a pair of outer layers between which the core layer is sandwiched, the outer layers having a higher rigidity than that of the core layer,

the outer glass sheet and the inner glass sheet are curved,

when the greatest distance of the distances between a virtual straight line connecting the center of an upper side and the center of a lower side of the inner glass sheet and the inner glass sheet is 20 mm or less, an attachment angle to the vertical with respect to the automobile is 45 degrees or less, and

when the greatest distance of the distances between the virtual straight line connecting the center of the upper side and the center of the lower side of the inner glass sheet and the inner glass sheet is more than 20 mm and 40 mm or less, an attachment angle to the vertical with respect to the automobile is 30 degrees or less.

Aspect 2 is the laminated glass according to aspect 1, wherein the outer glass sheet has a larger thickness than that of the inner glass sheet.

Aspect 3 is the laminated glass according to aspect 1 or 2, wherein the core layer has a Young's modulus of 1 to 25 MPa at a frequency of 100 Hz and a temperature of 20°C.

Aspect 4 is the laminated glass according to any one of aspects 1 to 3, wherein the inner glass sheet has a thickness of 0.6 to 1.8 mm.

Aspect 5 is the laminated glass according to any one of aspects 1 to 4, wherein the outer glass sheet has a thickness of 1.8 to 5.0 mm.

Aspect 6 is the laminated glass according to any one of aspects 1 to 5, wherein the core layer has a thickness of 0.1 to 2.0 mm.

Invention 4

In the laminated glass as disclosed in Patent Literature 1 above, even if the thickness is reduced, the decrease in the sound insulation performance at a predetermined frequency can be prevented to some extent, but there is a problem in that glass breakage due to an external force on the vehicle exterior side is likely to occur because the thickness of the glass plate on the vehicle exterior side is also reduced. In order to solve this problem, a method of decreasing the surface density of the laminated glass as a whole by thinning only the glass sheet on the vehicle interior side while keeping the thickness of the glass sheet on the vehicle exterior side at the same level as that of a conventional laminated glass is conceivable. In this respect, the inventors of the present invention have conducted research as described below.

First, the inventors of the present invention found that, as shown in FIG. 26, a configuration in which the glass plate on the vehicle interior side and the glass plate on the vehicle exterior side had different thicknesses exhibited lower sound insulation performance in a frequency range from 2000 to 5000 Hz, which humans can easily hear, than a configuration in which the exterior and interior glass plates had the same thickness. FIG. 26 is a graph showing the results of a simulation of a relationship between frequency and sound transmission loss (STL). This graph indicates the results of a laminated glass (referred to as "first laminated glass" hereinafter) including two glass sheets each having a thickness of 1. 5 mm and the results of a laminated glass (referred to as "second laminated glass" hereinafter) including glass sheets having different thicknesses of 2.0 mm and 1.0 mm. In both laminated glasses, a resin interlayer is arranged between the two glass sheets. It can be seen from this graph that the sound transmission loss of the second laminated glass is lower than that of the first laminated glass in a frequency range from 3000 to 5000 Hz. That is, it was found that the use of glass sheets having different thicknesses reduced the sound insulation performance in a frequency range from 2000 to 5000 Hz, which humans can easily hear.

As described above, if glass plates having different thicknesses are combined, the problem of the decrease in the sound transmission loss arises, even though weight reduction can be achieved. In particular, a problem arises in that the sound insulation performance in the frequency range from 2000 to 5000 Hz, which humans can easily hear, decreases, thus resulting in the deterioration of the environment in the vehicle. Such a problem may occur not only in glass for automobiles but also in all types of laminated glass that are required to achieve weight reduction and sound insulation.

The present invention was made in order to solve the foregoing problems, and it is an object thereof to provide a laminated glass including glass sheets having different thicknesses that achieves both weight reduction and sound insulation.

As a result of intensive research to solve the foregoing problems, the inventors of invention 4 found that the larger the difference in thickness between the outer glass sheet and the inner glass sheet was, the lower the sound insulation performance was. They also found that the more largely a center line in the vertical direction of the laminated glass was curved, the lower the sound insulation performance was. As a result of further research based on these findings, invention 4 was achieved. That is, invention 4 provides a laminated glass with the following aspects.

Aspect 1 is a laminated glass to be used in a windshield of an automobile, the laminated glass including:

an outer glass sheet;

an inner glass sheet arranged opposite to the outer glass sheet, the inner glass sheet having a smaller thickness than that of the outer glass sheet; and

an interlayer sandwiched between the outer glass sheet and the inner glass sheet,

wherein the interlayer includes at least a core layer and a pair of outer layers between which the core layer is sandwiched, the outer layers having a higher rigidity than that of the core layer,

a difference in thickness between the outer glass sheet and the inner glass sheet is 0.7 mm or less,

the outer glass sheet and the inner glass sheet are curved, and

the greatest distance of the distances between a virtual straight line connecting the center of an upper side and the center of a lower side of the inner glass sheet and the inner glass sheet is 30 mm or less.

Aspect 2 is the laminated glass according to aspect 1, wherein the core layer has a Young's modulus of 1 to 25 MPa at a frequency of 100 Hz and a temperature of 20°C.

Aspect 3 is the laminated glass according to aspect 1 or 2, wherein the inner glass sheet has a thickness of 0.6 to 1.8 mm.

Aspect 4 is the laminated glass according to any one of aspects 1 to 3, wherein the outer glass sheet has a thickness of 1.8 to 5.0 mm.

Aspect 5 is the laminated glass according to any one of aspects 1 to 4, wherein the core layer has a thickness of 0.1 to 2.0 mm.

Invention 5

As a result of intensive research to solve a problem similar to the problem solved by invention 4, the inventors of invention 5 found that even when the outer glass sheet and the inner glass sheet had different thicknesses, the larger the thickness of the core layer was, the higher the sound insulation performance was. As a result of further research based on these findings, invention 5 was achieved. That is, invention 5 provides a laminated glass with the following aspects.

Aspect 1 is a laminated glass to be used in a windshield of an automobile, the laminated glass including:

an outer glass sheet;

an inner glass sheet arranged opposite to the outer glass sheet, the inner glass sheet having a smaller thickness than that of the outer glass sheet; and

an interlayer sandwiched between the outer glass sheet and the inner glass sheet,

wherein the interlayer includes at least a core layer and a pair of outer layers between which the core layer is sandwiched, the outer layers having a higher rigidity than that of the core layer, and

the core layer has a thickness of 0.1 mm or more.

Aspect 2 is the laminated glass according to aspect 1, wherein a difference in thickness between the outer glass sheet and the inner glass sheet is 0.7 mm or less.

Aspect 3 is the laminated glass according to aspect 1 or 2, wherein the core layer has a Young's modulus of 1 to 25 MPa at a frequency of 100 Hz and a temperature of 20°C.

Aspect 4 is the laminated glass according to any one of aspects 1 to 3, wherein the inner glass sheet has a thickness of 0.6 to 1.8 mm.

Aspect 5 is the laminated glass according to any one of aspects 1 to 4, wherein the outer glass sheet has a thickness of 1.8 to 5.0 mm.

Aspect 6 is the laminated glass according to any one of aspects 1 to 5, wherein the core layer has a thickness of 0.1 to 2.0 mm.

Advantageous Effects of the Invention

With the present invention, it is possible to provide a laminated glass that can suppress the decrease in sound insulation performance even if the attachment angle is large.

Brief Description of Drawings

FIG. 1 is a cross-sectional view showing an embodiment of a laminated glass according to the present invention.

FIG. 2 is a graph showing a relationship between frequency and sound transmission loss with respect to cases where an outer glass sheet and an inner glass sheet have different thicknesses.

FIGS. 3 (a) and 3 (b) are a front view and a cross-sectional view, respectively, showing a depth of bend of a curved laminated glass.

FIG. 4 is a graph showing a relationship between frequency and sound transmission loss with respect to cases where the depth of bend varies.

FIG. 5 is an example of an image that is used for measurement of a core layer.

FIG. 6 is a graph showing a relationship between frequency and sound transmission loss with respect to the core layers having varying thicknesses.

FIG. 7 is a graph showing a relationship between frequency and sound transmission loss with respect to pieces of single-sheet glass having varying thicknesses.

FIG. 8 is an example of an image that is used for measurement of the core layer.

FIG. 9 shows schematic diagrams illustrating a method of attaching a laminated glass.

FIG. 10 is a graph showing a relationship between frequency and STL with respect to the core layers having varying thicknesses when an attachment angle is 60 degrees.

FIG. 11 is a graph showing a relationship between frequency and STL when the attachment angle is 60 degrees and a core layer 31 has a thickness of 0.1 mm.

FIG. 12 is a graph showing a relationship between frequency and STL with respect to the core layers having varying Young's moduli when the attachment angle is 60 degrees, the outer glass sheet has a thickness of 2.0 mm, and the inner glass sheet has a thickness of 1.5 mm.

FIG. 13 is a graph showing a relationship between frequency and STL when the attachment angle is 60 degrees and the core layer 31 has a Young's modulus of 10 MPa.

FIG. 14 is a graph showing the results of evaluation of outer glass sheets.

FIG. 15 is a model diagram of a simulation for outputting sound transmission loss.

FIG. 16 is a graph showing evaluation with respect to the depth of bend and the difference in thickness between the outer glass sheet and the inner glass sheet.

FIG. 17 is a graph showing evaluation with respect to the depth of bend and the difference in thickness between the outer glass sheet and the inner glass sheet.

FIG. 18 is a graph showing evaluation with respect to the difference in thickness between the outer glass sheet and the inner glass sheet and the thickness of the core layer.

FIG. 19 is a graph showing evaluation with respect to the attachment angle and the thickness of the core layer.

FIG. 20 is a graph showing evaluation with respect to the attachment angle and the thickness of the core layer.

FIG. 21 is a graph showing evaluation with respect to the attachment angle and the thickness of the core layer.

FIG. 22 is a graph showing evaluation with respect to the attachment angle and the Young's modulus of the core layer.

FIG. 23 is a graph showing evaluation with respect to the attachment angle and the depth of bend.

FIG. 24 is a graph showing evaluation with respect to the attachment angle and the depth of bend.

FIG. 25 is a graph showing evaluation with respect to the attachment angle.

FIG. 26 is a graph showing a relationship between frequency and sound transmission loss with respect to a conventional laminated glass.

Description of Embodiments

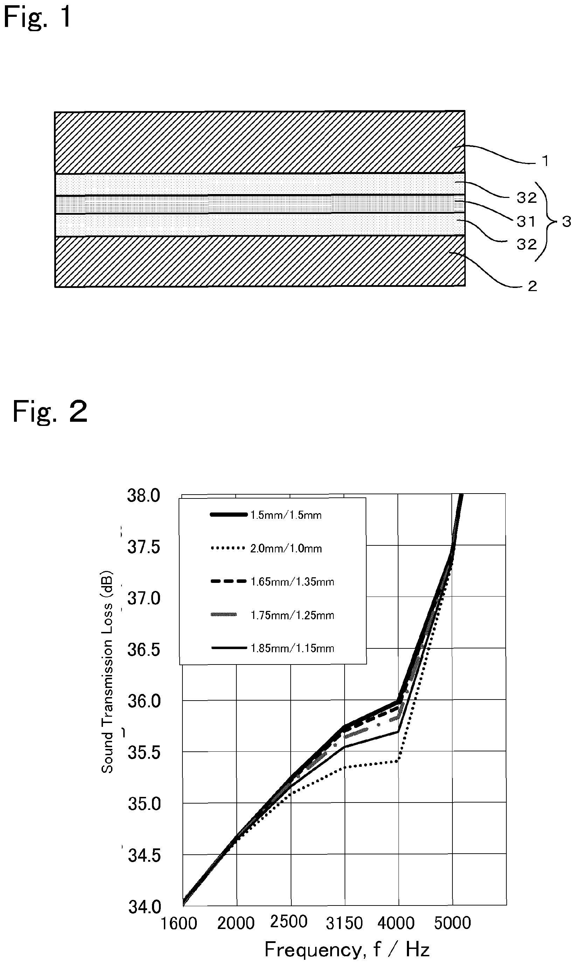

Hereinafter, an embodiment of a laminated glass according to the present invention will be described with reference to the drawings. FIG. 1 is a cross-sectional view of a laminated glass according to this embodiment. As shown in this figure, the laminated glass according to this embodiment is a laminated glass to be used in a windshield of an automobile, and is constituted by an outer glass sheet 1 to be arranged on the vehicle exterior side, an inner glass sheet 2 to be arranged on the vehicle interior side, and an interlayer 3 that is sandwiched between these glass sheets. The interlayer 3 can be constituted by a core layer 31 and a pair of outer layers 32 between which the core layer 31 is sandwiched, but this is merely an example, and the details thereof will be described below. The individual members will be described below.

1. Outer glass sheet and inner glass sheet

Known glass sheets can be used as the outer glass sheet 1 and the inner glass sheet 2, and these glass sheets can also be made of heat-ray absorbing glass, regular clear glass or green glass, or UV green glass. However, there is a need to attain a visible light transmittance that conforms to the safety standards of a country in which the automobile is to be used. For example, an adjustment can be made so that the outer glass sheet 1 ensures a required solar absorptance and the inner glass sheet 2 provides a visible light transmittance that meets the safety standards. Examples of the compositions of clear glass, heat-ray absorbing glass, and soda-lime based glass are shown below.

Clear glass

$SiO_2$: 70 to 73 mass%
$Al_2O_3$: 0.6 to 2.4 mass%
CaO: 7 to 12 mass%
MgO: 1.0 to 4.5 mass%
$R_2O$: 13 to 15 mass% (R is an alkali metal)
Total iron oxide ($T\text{-}Fe_2O_3$) in terms of $Fe_2O_3$: 0.08 to 0.14 mass%

Heat-ray absorbing glass

With regard to the composition of heat-ray absorbing glass, a composition obtained based on the composition of clear glass by setting the ratio of the total iron oxide ($T\text{-}Fe_2O_3$) in terms of $Fe_2O_3$ to 0.4 to 1.3 mass%, the ratio of $CeO_2$ to 0 to 2 mass%, and the ratio of $TiO_2$ to 0 to 0.5 mass% and reducing the components (mainly $SiO_2$ and $Al_2O_3$) forming the framework of glass by an amount corresponding to the increases in $T\text{-}Fe_2O_3$, $CeO_2$, and $TiO_2$ can be used, for example.

Soda-lime based glass

$SiO_2$: 65 to 80 mass%
$Al_2O_3$: 0 to 5 mass%
CaO: 5 to 15 mass%
MgO: 2 mass% or more
NaO: 10 to 18 mass%
$K_2O$: 0 to 5 mass%
MgO+CaO: 5 to 15 mass%
$Na_2O+K_2O$: 10 to 20 mass%
$SO_3$: 0.05 to 0.3 mass%
$B_2O_3$: 0 to 5 mass%
Total iron oxide ($T\text{-}Fe_2O_3$) in terms of $Fe_2O_3$: 0.02 to 0.03 mass%

The outer glass sheet 1 is mainly required to have durability and impact resistance against external hazards. For example, when this laminated glass is used as a windshield of an automobile, impact-resistance performance with respect to flying objects such as small stones is required. From this viewpoint, the thickness of the outer glass sheet 1 is preferably 1.8 mm or more, more preferably 1.9 mm or more, even more preferably 2.0 mm or more, even more preferably 2.1 mm or more, and even more preferably 2.2 mm or more. On the other hand, the upper limit of the thickness of the outer glass is preferably 5.0 mm or less, more preferably 4.0 mm or less, even more preferably 3.1 mm or less, even more preferably 2.5 mm or less, and even more preferably 2.4 mm or less. Among these, a thickness of more than 2.1 mm and 2.5 mm or less, and particularly a thickness of 2.2 mm or more and 2.4 mm or less is preferable.
On the other hand, although the inner glass sheet 2 can be made to have the same thickness as that of the outer glass sheet 1, the inner glass sheet 2 can be made to have a smaller thickness than that of the outer glass sheet 1 in order to reduce the weight of the laminated glass, for example. Specifically, as described below, it is preferable that the inner glass sheet 2 has a thickness in the range of 1.2 mm ± 0.6 mm that is easily affected in a sound frequency range from 2000 to 5000 Hz, which humans can easily hear. Specifically, the thickness of the inner glass sheet 2 is preferably 0.6 mm or more, more preferably 0.8 mm or more, even more preferably 1.0 mm or more, even more preferably 1.3 mm or more, and even more preferably less than 1.1. On the other hand, the upper limit of the thickness of the inner glass sheet 2 is preferably 1.6 mm or less, more preferably 1.4 mm or less, even more preferably 1.3 mm or less, and even more preferably less than 1.1 mm. Among these, a thickness of 0.6 mm or more and less than 1.1 mm is preferable, for example.

In this regard, the inventors of the present invention examined the difference in thickness between the outer glass sheet 1 and the inner glass sheet 2 and obtained the results described below. That is, it can be seen from FIG. 2 that the larger the difference in thickness between the outer glass sheet 1 and the inner glass sheet 2 is, the lower the sound insulation performance is. FIG. 2 is a graph showing sound transmission loss (STL) calculated under the following conditions (the calculation was performed in accordance with the method in Examples, which will be described below). First, flat clear glass sheets having a horizontal length of 800 mm and a vertical length of 500 mm were used as the outer glass sheet 1 and the inner glass sheet 2. The interlayer 3 was constituted by three layers, namely the core layer 31 and the pair of outer layers 32 between which the core layer 31 was sandwiched. The core layer had a thickness of 0.10 mm, the outer layers each had a thickness of 0.33 mm, and the total thickness was 0.76 mm. The core layer 31 had a Young's modulus (measured at a frequency of 100 Hz and a temperature of 20°C) of 25 MPa, and the outer layers 32 each had a Young's modulus (measured at a frequency of 100 Hz and a temperature of 20°C) of 441 MPa. It should be noted that, unless otherwise stated, the specifications of the core layer 31 and the outer layer 32 in the description below are the same as those described above. Furthermore, clear glass was used unless otherwise stated, but there is no limitation to this. The reason for this is that sound insulation performance is determined with the Young's modulus, Poisson's ratio, and density of glass, and these values of clear glass are the same as those of green glass, for example.

It can be seen from FIG. 2 that when the difference in thickness between the outer glass sheet 1 and the inner glass sheet 2 is larger than 0.7 mm, the STL decreases in a frequency range from 2500 to 5000 Hz. Moreover, the STL also significantly decreases in a low frequency range lower than or equal to 3000 Hz. From this viewpoint, the difference in thickness between the outer glass sheet 1 and the inner glass sheet 2 is preferably 0.7 mm or less, and more preferably 0.5 mm or less.

The shapes of the outer glass sheet 1 and the inner glass sheet 2 according to this embodiment may be flat or curved. However, the STL decreases more in the case of a curved shape, and therefore, a glass plate having a curved shape particularly needs an acoustic countermeasure. It can be considered that the reason as to why STL values decrease more in the case of curved shapes than in the case of flat shapes is that the effect of the resonance mode is greater in the case of curved shapes.

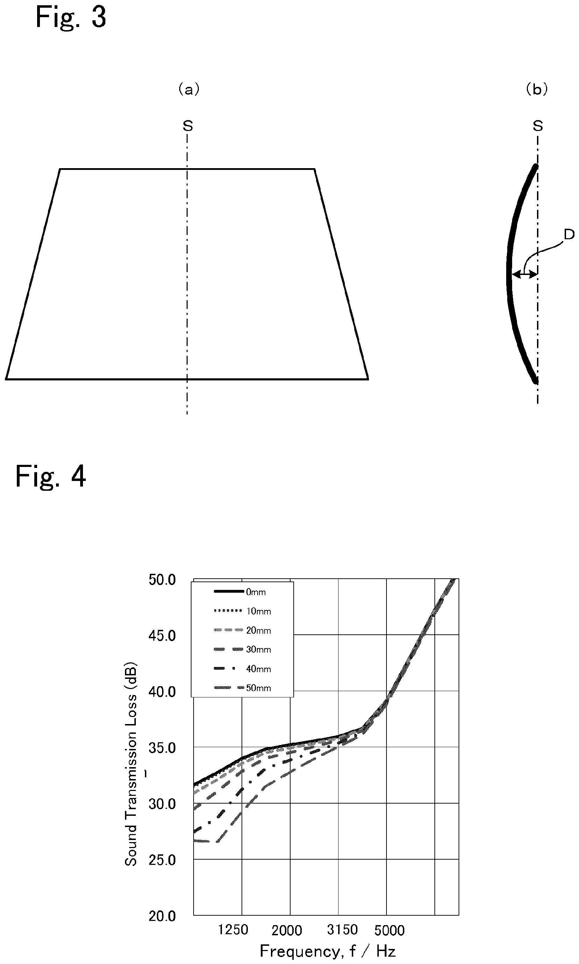

Furthermore, the inventors of the present invention found that in the cases where the laminated glass had a curved shape, even when the outer glass sheet 1 and the inner glass sheet 2 had the same thickness, the larger the depth of bend was, the lower the sound insulation performance was. "Depth of bend" is an amount indicating the bend of the glass sheet. For example, as shown in FIG. 3, when a center in the horizontal direction of a glass sheet, that is, a virtual straight line S connecting the center of an upper side and the center of a lower side of a glass sheet, is set, the greatest distance of the distances between this straight line S and the surface (surface on the concave side) of the glass sheet is defined as the "depth of bend D".

FIG. 4 shows the results of a simulation of a relationship between frequency and STL with respect to cases where the depth of bend varies. In this simulation, a laminated glass was configured such that both the outer glass sheet 1 and the inner glass sheet 2 had a thickness of 1.75 mm, and only the lines connecting the upper side and the lower side of the glass sheets 1 and 2 were curved. The other conditions are the same as those of the graph shown in FIG. 2. It can be seen from FIG. 4 that in this laminate glass, the larger the depth of bend is, the lower the STL is in a frequency range lower than or equal to 4000 Hz. In particular, when the depth of bend is larger than 30 mm, the STL significantly decreases. It is considered that the reason for this is that when the depth of bend increases, the sound incident angle with respect to the laminated glass is likely to increase, and thus the laminated glass is likely to resonate. From this viewpoint, the depth of bend is preferably 30 mm or less, and more preferably 20 mm or less.

As examined above, when the outer glass sheet 1 and the inner glass sheet 2 have different thicknesses, the sound insulation performance decreases, and in order to suppress the decrease in sound insulation performance, as mentioned above, it is preferable that the difference in thickness between the outer glass sheet 1 and the inner glass sheet 2 is 0.7 mm or less, and the depth of bend is 30 mm or less.

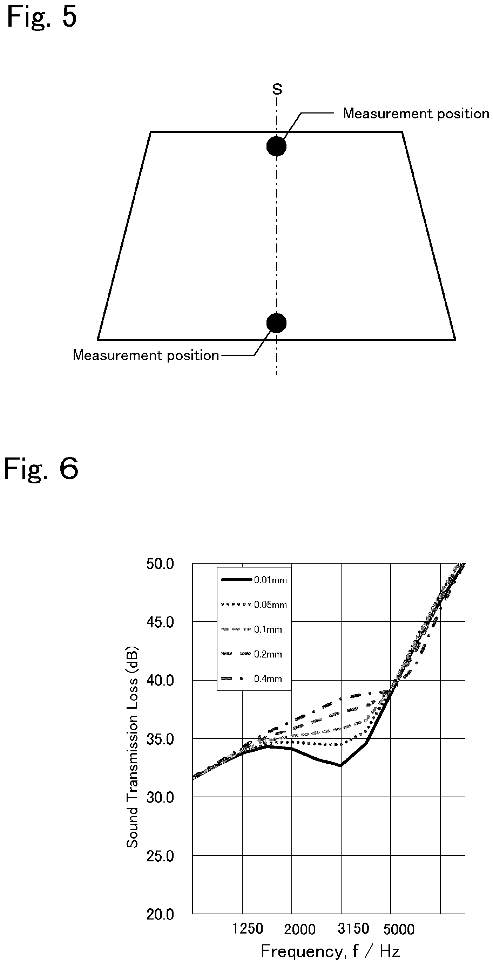

Here, an example of a method of measuring the thickness of a curved glass sheet will be described. First, with respect to the measurement position, as shown in FIG. 5, the measurement is performed at two positions: an upper position and a lower position on a center line S extending vertically in the center in the horizontal direction of a glass sheet. Although there is no particular limitation on the measuring device, a thickness gauge such as SM-112 manufactured by TECLOCK Corporation can be used, for example. During measurement, the glass sheet is arranged such that the curved surface of the glass sheet is placed on a flat surface, and an end portion of the glass sheet is sandwiched and measured with the above-mentioned thickness gauge. It should be noted that a flat glass sheet can also be measured in the same manner as a curved glass sheet.

2. Interlayer

The interlayer 3 includes a plurality of layers. For example, as shown in FIG. 1, the interlayer 3 can be constituted by three layers, namely the soft core layer 31 having a low rigidity and the outer layers 32 that have a higher rigidity than that of the core layer 31 and between which the core layer 31 is sandwiched. However, there is no limitation to this configuration, and it is sufficient if the interlayer 3 includes a plurality of layers including the soft core layer 31. For example, the interlayer 3 may also include two layers including the core layer 31 (one core layer and one outer layer), or an odd number of five or more layers in which the core layer 31 is arranged in the center (one core layer and four outer layers), or an even number of layers in which the core layer 31 is included therebetween (one core layer with the other layers constituting outer layers).

Although there is no particular limitation on the core layer 31 as long as the core layer 31 is softer than the outer layer 32, materials can be selected based on the Young' s modulus in this regard. For example, it is preferable that the core layer 31 has a Young's modulus of 1 MPa or more and 25 MPa or less at a frequency of 100 Hz and a temperature of 20°C. In particular, the upper limit thereof is preferably 20 MPa or less, more preferably 16 MPa or less, and even more preferably 10 MPa or less. With regard to the measurement method, it is possible to use a solid viscoelasticity measuring apparatus DMA 50 manufactured by Metravib and perform frequency dispersion measurement with a strain amount of 0.05%, for example. In the following description, the Young's modulus as used herein refers to a measurement value obtained by using the above-described method, unless otherwise stated. However, although an actual measured value is used in measurement at a frequency lower than or equal to 200 Hz, a value that is calculated based on actual measured values is used at a frequency higher than 200 Hz. This calculated value is based on a master curve that is calculated from actual measured values using the WLF method.

On the other hand, there is no particular limitation on the Young's moduli of the outer layers 32, and it is sufficient if the Young's moduli of the outer layers 32 are larger than that of the core layer 31. For example, the Young's moduli of the outer layers 32 is preferably 400 MPa or more, more preferably 440 MPa or more, even more preferably 560 MPa or more, even more preferably 650 MPa or more, even more preferably 1300 MPa or more, and even more preferably 1764 MPa or more, at a frequency of 100 Hz and a temperature of 20°C. Meanwhile, there is no particular limitation on the upper limit of the Young's moduli of the outer layers 32, but the Young's moduli can be set from the viewpoint of workability, for example. It is empirically known that when the Young's modulus is set to 1750 MPa or more, for example, the workability decreases, in particular, cutting is difficult. Also, in the case where a pair of outer layers 32 between which the core layer 31 is sandwiched are provided, it is preferable to set the Young's modulus of the outer layer 32 on the outer glass sheet 1 side to be larger than the Young's modulus of the outer layer 32 on the inner glass sheet 2 side. This improves the breakage-resistance performance with respect to an external force from the outside of a vehicle or a building.

At a frequency of 100 Hz and a temperature of 20°C, tan$\delta$ of the core layer 31 of the interlayer 3 is preferably 0.5 to 3.0, more preferably 0.7 to 2.0, and even more preferably 1.0 to 1.5. When tan$\delta$ is within the above-mentioned range, sound is easily absorbed, and thus the sound insulation performance is improved. However, tan$\delta$ of more than 3.0 causes the interlayer 3 to be too soft and difficult to handle, and thus is not preferable. Also, tan$\delta$ of less than 0.5 causes a decrease in impact-resistance performance and thus is not preferable.

On the other hand, it is sufficient if the values of tan$\delta$ of the outer layers are smaller than that of the core layer 31, and the values of tan$\delta$ of the outer layers can be set to be between 0.1 and 3.0 at a frequency of 100 Hz and a temperature of 20°C, for example.

Although there is no particular limitation on the materials constituting the layers 31 and 32, the materials are required to be such that at least the Young' s moduli of the layers can be set within respective ranges as described above, and resin materials can be used, for example. Specifically, the outer layers 32 can be made of a polyvinyl butyral resin (PVB), for example. A polyvinyl butyral resin has excellent adhesiveness to the glass sheets and penetration resistance and is thus preferable. On the other hand, the core layer 31 can be made of an ethylene vinyl acetate resin (EVA) or a polyvinyl acetal resin, which is softer than the polyvinyl butyral resin included in the outer layers. When the soft core layer is sandwiched between the outer layers, it is possible to significantly improve the sound insulation performance while keeping the adhesiveness and the penetration resistance that are equivalent to those of a single-layered resin interlayer.

Generally, the hardness of a polyvinyl acetal resin can be controlled by adjusting (a) the degree of polymerization of polyvinyl alcohol, which is the starting material, (b) the degree of acetalization, (c) the type of plasticizer, (d) the ratio of the plasticizer to be added, and the like. Accordingly, a hard polyvinyl butyral resin that is used for the outer layers and a soft polyvinyl butyral resin that is used for the core layer can be produced with the same polyvinyl butyral resin by appropriately adjusting at least one condition selected from the aforementioned conditions. Furthermore, the hardness of a polyvinyl acetal resin can be controlled based on the type of aldehyde that is used for acetalization and whether co-acetalization using a plurality of kinds of aldehydes or pure acetalization using a single kind of aldehyde is performed. Although not necessarily applicable to every case, the larger the number of carbon atoms of the aldehyde that is used to obtain a polyvinyl acetal resin is, the softer the resulting polyvinyl acetal resin tends to be. Accordingly, for example, if the outer layers are made of a polyvinyl butyral resin, a polyvinyl acetal resin that is obtained by acetalizing an aldehyde having 5 or more carbon atoms (e.g., n-hexyl aldehyde, 2-ethylbutyl aldehyde, n-heptyl aldehyde, or n-octyl aldehyde) with polyvinyl alcohol can be used for the core layer. It should be noted that there is no limitation to the above-mentioned resins and the like as long as predetermined Young's moduli can be obtained.

The total thickness of the interlayer 3 is not particularly specified, but is preferably 0.3 to 6.0 mm, more preferably 0.5 to 4.0 mm, and even more preferably 0.6 to 2.0 mm. The thickness of the core layer is preferably 0.1 to 2.0 mm, and more preferably 0.1 to 0.6 mm. In particular, the lower limit is preferably 0.1 mm or more, more preferably 0.15 mm or more, and even more preferably 0.2 mm or more. If the thickness is less than 0.1 mm, as described below, the soft core layer 31 is unlikely to have an effect, and if the thickness is more than 2.0 mm or 0.6 mm, the total thickness is increased, resulting in an increase in cost. On the other hand, the thicknesses of the outer layers 32 are not particularly limited, but are preferably 0.1 to 2.0 mm and more preferably 0.1 to 1.0 mm, for example. Alternatively, it is also possible to fix the total thickness of the interlayer 3 and adjust the thickness of the core layer 31 without exceeding the fixed total thickness.

Here, the inventors of the present invention examined the thickness of the core layer 31 and obtained the results described below. That is, as shown in FIG. 6, it is found that the larger the thickness of the core layer 31 is, the higher the sound insulation performance is. FIG. 6 is a graph showing a relationship between frequency and sound transmission loss (STL) with respect to the core layers 31 having varying thicknesses, the relationship being calculated under the following conditions (the calculation was performed in accordance with the method in Examples, which will be described below: the same applies hereinafter). First, flat clear glass sheets having a horizontal length of 800 mm and a vertical length of 500 mm were used as the outer glass sheet 1 and the inner glass sheet 2. The interlayer 3 was constituted by three layers, namely the core layer 31 and the pair of outer layers 32 between which the core layer 31 was sandwiched. The outer layers had a thickness of 0.33 mm. The core layer 31 had a Young's modulus (measured at a frequency of 100 Hz and a temperature of 20°C) of 25 MPa, and the outer layers 32 had a Young's modulus (measured at a frequency of 100 Hz and a temperature of 20°C) of 441 MPa.

As shown in FIG. 6, when the core layer 31 has a thickness of 0.1 mm or more, in a frequency range from 2000 to 5000 Hz, the larger the frequency is, the higher the STL is. On the other hand, when the core layer has a thickness of less than 0.1 mm, the STL decreases in a frequency range from 2000 to 5000 Hz. It can be considered that the reason for this is as follows.

First, if the core layer 31 has a small thickness, the soft core layer 31 has little influence, and therefore, the interlayer 3 mainly exhibits strong properties of the hard outer layer 32. That is, the outer glass sheet 1 and the inner glass sheet 2 are connected by the hard interlayer 3, and thus even a laminated glass has strong properties that act like a single glass panel having the same thickness as a total of the thicknesses of the outer glass sheet 1 and the inner glass sheet 2. Moreover, as shown in the formula below, generally, the smaller the thickness or the Young's modulus of a glass panel is, the more the coincidence frequency is shifted toward the high-frequency side.

Formula 1

$$f_c = \frac{c^2}{2\pi h}\sqrt{\frac{12\rho_m(1-v^2)}{E}}$$

$f_c$: coincidence critical frequency (Hz)
$\rho_m$: density of material
E: Young's modulus of material
$v$: Poisson's ratio of material
h: thickness of material c: speed of sound
* Coincidence effect is a sharp drop in sound transmission loss at the characteristic frequency.

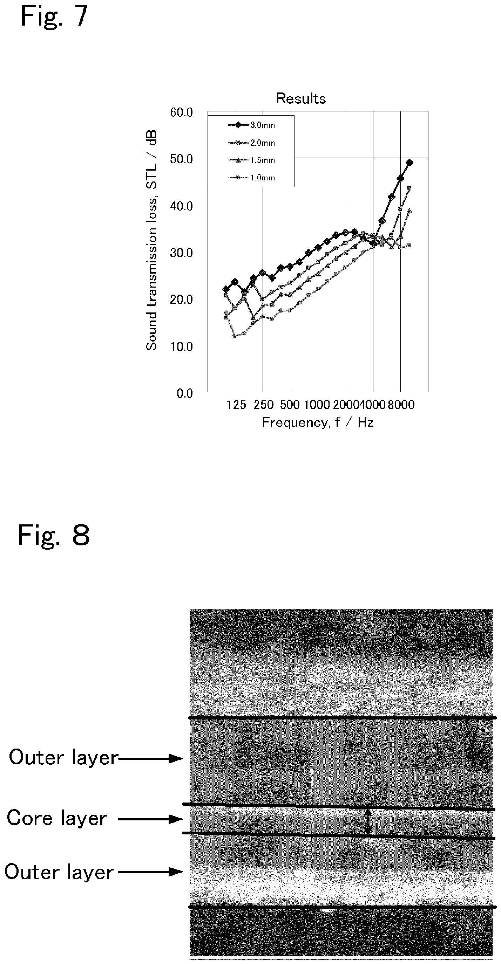

Taking these into account, if the interlayer 3 is hard, that is, the interlayer 3 has a large Young's modulus, even a laminated glass having a total thickness of 4 mm has a coincidence frequency of 3 to 4 kHz, similar to a single sheet of glass having a thickness of 4 mm, and thus the performance in a frequency band that humans can easily hear is low. On the other hand, if the interlayer 3 is soft, that is, the interlayer 3 has a small Young's modulus, the performance of the laminated glass is the combined performance of two glass sheets. For example, the performance of a laminated glass constituted by a 2-mm glass sheet and a 1-mm glass sheet would tend to be a combined performance of the two glass sheets. That is, the thickness of each of the glass sheets shown in FIG. 7 is smaller than 4 mm, and therefore, their coincidence frequencies are shifted toward the high-frequency side, so that the 2-mm glass sheet has a coincidence frequency around 5000 Hz, and the 1-mm glass sheet has a coincidence frequency at 8000 Hz. The performance of a laminated glass including these glass sheets having the respective thicknesses of 1 mm and 2 mm is a combined performance of these glass sheets, and therefore, this laminated glass has a coincidence frequency between 5000 Hz and 8000 Hz. It should be noted that FIG. 7 is a graph showing the results of a simulation of a relationship between frequency and STL with respect to single sheets of glass rather than a laminated glass.

Therefore, when the thickness of the core layer 31, which is a part of the interlayer 3, is increased, the influence of the soft core layer 31 increases, and thus the laminated glass exhibits combined properties of the two glass sheets provided to sandwich the core layer 31 of the interlayer 3. Accordingly, in the case where the outer glass sheet 1 and the inner glass sheet 2 have different thickness, even if the thickness of the inner glass sheet 2 is reduced, for example, the sound insulation performance does not decrease at frequencies that humans can easily hear. That is, the coincidence frequency is shifted toward the high-frequency side by reducing the thickness of the inner glass sheet 2. Therefore, as described above, the sound transmission loss that has decreased in a frequency range from 2000 to 5000 Hz due to the reduction in the thickness of the inner glass sheet 2 can be increased. Consequently, it is possible to reduce the weight of the laminated glass and also improve the sound insulation performance in a frequency range from 2000 to 5000 Hz, which humans can easily hear.

Accordingly, in order to improve the sound insulation performance in a frequency range from 2000 to 5000 Hz, the thickness of the soft core layer 31 needs to be increased. Moreover, as described above, when the difference in thickness between the outer glass 1 and the inner glass sheet 2 is small, the sound insulation performance can be further improved.

It should be noted that the above findings concern the thickness of the core layer 31, which is softer than the outer layers 32, but the same effect can also be obtained by setting the Young's modulus of the core layer 31 to be in the above-described range.

The thickness of the core layer 31 can be measured as described below, for example. First, the cross section of a laminated glass is enlarged by a factor of 175 and displayed using a microscope (e.g., VH-5500 manufactured by Keyence Corporation). Then, the thickness of the core layer 31 is visually identified and measured. At this time, in order to eliminate variations seen in visual identification, the measurement is performed five times, and an average value is taken as the thickness of the core layer 31. For example, an enlarged photograph of a laminated glass as shown in FIG. 8 is taken, in which the core layer has been identified, and the thickness of the identified core layer is measured. It should be noted that the thicknesses of the outer layers 32 can also be measured in the same manner.

It should be noted that the interlayer 3 is not required to have a constant thickness over the entirety. For example, the interlayer 3 can also be formed in a wedge shape for a laminated glass that is used in a head-up display. In this case, the thickness of the interlayer 3 is measured at a position with the smallest thickness, that is, in the lowest side portion of the laminated glass. If the interlayer 3 has a wedge shape, the outer glass sheet 1 and the inner glass sheet 2 are not arranged in parallel, but it should be construed that such an arrangement is also included in the "opposite arrangement" of the outer glass sheet and the inner glass sheet of the present invention. That is, the "opposite arrangement" of the present invention includes the arrangement of the outer glass sheet 1 and the inner glass sheet 2 when the interlayer 3 whose thickness increases at a rate of change of 3 mm or less per meter is used, for example.

Although there is no particular limitation on the method of manufacturing the interlayer 3, examples thereof include a method in which a resin component, such as the above-described polyvinyl acetal resin, a plasticizer, and other additives, if necessary, are mixed and uniformly kneaded, and then the layers are collectively extruded, and a method in which two or more resin films that are produced using the aforementioned method are laminated with a pressing process, a lamination process, or the like. In the method of laminating with the pressing process, the lamination process, or the like, each of the resin films before laminating may have a single-layer structure or a multilayer structure.

3. Method of manufacturing laminated glass

There is no particular limitation on the method of manufacturing the laminated glass according to this embodiment, and a conventionally known method of manufacturing a laminated glass can be adopted. For example, first, the interlayer 3 is sandwiched between the outer glass sheet 1 and the inner glass sheet 2, and these are placed into a rubber bag and preliminarily bonded together at about 70 to 110°C under vacuum suction. Preliminary bonding can be performed using a method other than this method. For example, the interlayer 3 is sandwiched between the outer glass sheet 1 and the inner glass sheet 2, and these are heated at 45 to 65°C in an oven. Subsequently, this laminated glass is pressed by a roller at 0.45 to 0.55 MPa. Then, this laminated glass is again heated at 80 to 105°C in an oven and thereafter again pressed by a roller at 0.45 to 0.55 MPa. Thus, preliminary bonding is finished.

Next, permanent bonding is performed. The preliminarily bonded laminated glass is permanently bonded using an autoclave at a pressure of 8 to 15 atmospheres and at 100 to 150°C. Specifically, permanent bonding can be performed under the conditions of a pressure of 14 atmospheres and 145°C. Thus, the laminated glass according to this embodiment is manufactured.

4. Attachment of laminated glass

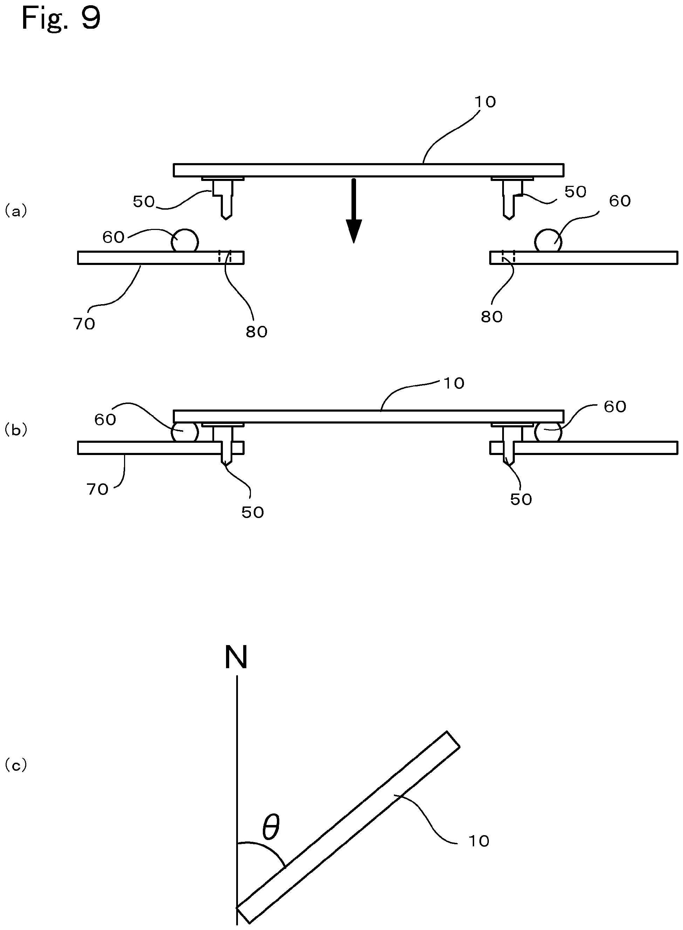

The above-described laminated glass is used as a windshield and attached to an automobile by using a frame such as a urethane frame, an adhesive material, a clamp, and the like. The following is an example of attachment to an automobile. As shown in FIG. 9(a), first, pins 50 are attached to both ends of a laminated glass 10 beforehand, and an adhesive material 60 is applied to a frame 70 of an automobile, which is an attachment target. Through holes 80 into which the respective pins are inserted are formed in the frame beforehand. Then, as shown in FIG. 9(b), the laminated glass 10 is attached to the frame 70. First, the pins 50 are inserted into the respective through holes 80, and the laminated glass 10 is temporarily fixed to the frame 70. At this time, the pins 50 are inserted only halfway into the respective through holes 80 because a step is formed in each of the pins 50, and therefore, a gap is created between the frame 70 and the laminated glass 10. The above-described adhesive material 60 has been applied to this gap, and thus the laminated glass 10 and the frame 70 are fixed to each other via the adhesive material 60 as time elapses.

Incidentally, as described in the section of prior art with reference to FIG. 25, it is known that the STL significantly decreases in a frequency range from 2000 to 5000 Hz, particularly near 3150 Hz, when the attachment angle of the laminated glass exceeds 45 degrees. It is considered that the reason for this is that when the attachment angle increases, the angle of sound incident to the laminated glass with respect to the horizontal direction is likely to increase, and thus the laminated glass is likely to resonate. Accordingly, in attaching the laminated glass as described above, the attachment angle θ of the laminated glass 10 is preferably set at an angle of 45 degrees or less to the vertical N, as shown in FIG. 9(c).

Moreover, the above-described depth of bend also contributes to the suppression of the decrease in sound insulation performance in a frequency range from 2000 to 5000 Hz, particularly near 3150 Hz. For example, when the depth of bend is 0 mm or more and 20 mm or less, the attachment angle is preferably set to 45 degrees or less, and when the depth of bend is more than 20 mm and 40 mm or less, the attachment angle is preferably set to 30 degrees or less.

However, the attachment angle of the laminated glass exceeds 45 degrees in some types of automobiles, and in such a case, the sound insulation performance decreases. Therefore, in order to suppress the decrease in sound insulation performance in a frequency range from 2000 to 5000 Hz even in cases where the attachment angle is large, it is preferable to reduce the Young's modulus of the core layer 31 or increase the thickness of the core layer 31 as described above. It was found that this improves the sound insulation performance in substantially the same frequency range as the frequency range in which the sound insulation performance decreases due to the attachment angle being increased. In this case, the outer glass sheet 1 and the inner glass sheet 2 may have the same thickness.

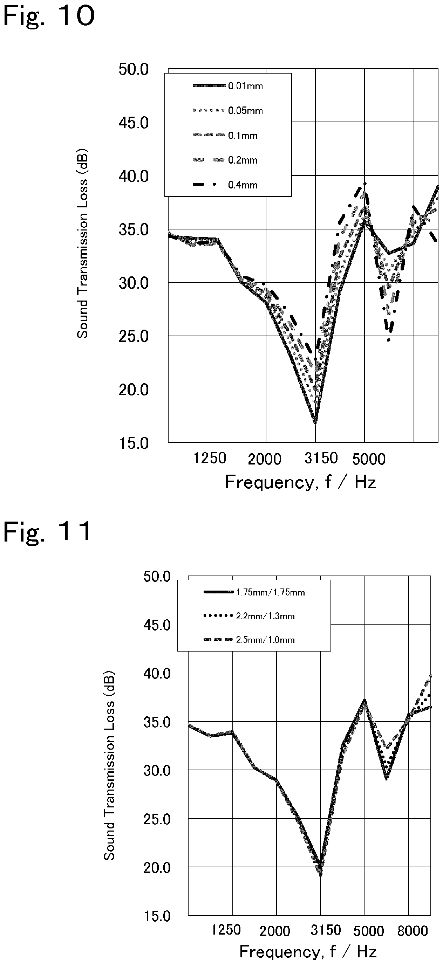

On the other hand, the inventors of the present invention found that when the attachment angle of the laminated glass was increased and the thickness of the core layer 31 was increased, the sound insulation decreased near a frequency of 5000 to 8000 Hz. FIG. 10 is a graph showing a relationship between frequency and STL with respect to the core layers having varying thicknesses when an attachment angle is 60 degrees. As shown in this figure, the larger the thickness of the core layer 31 is, the higher the STL is in a range from 2000 to 5000 Hz, but the STL decreases in a range from 5000 to 8000 Hz.

With respect to this, the inventors of the present invention found that the larger the difference in thickness between the outer glass sheet 1 and the inner glass sheet 2 was, the higher the STL was in a range from 5000 to 8000 Hz. FIG. 11 is a graph showing a relationship between frequency and STL when the attachment angle is 60 degrees and the core layer 31 has a thickness of 0.1 mm. This graph shows the results in the case where three types of laminated glasses that differ in the thickness of the outer glass sheet 1 and the thickness of the inner glass sheet 2 were prepared. That is, a laminated glass including the outer glass sheet 1 and the inner glass sheet 2 both having a thickness of 1.75 mm, a laminated glass including the outer glass sheet 1 having a thickness of 2.2 mm and the inner glass sheet 2 having a thickness of 1. 3 mm, and a laminated glass including the outer glass sheet 1 having a thickness of 2.5 mm and the inner glass sheet 2 having a thickness of 1.0 mm were prepared. As a result, in a range from 2000 to 5000 Hz, the laminated glass in which the difference in thickness between the outer glass sheet 1 and the inner glass sheet 2 is large has the lowest STL, but does not greatly differ from the other laminated glasses. On the other hand, in a range from 5000 to 8000 Hz, the laminated glass in which the difference in thickness between the outer glass sheet 1 and the inner glass sheet 2 is large has the highest STL.

It was found from this viewpoint that when the attachment angle is a large angle of 45 degrees or more, it is preferable that the difference in thickness between the outer glass sheet 1 and the inner glass sheet 2 is large, that is, the difference is preferably larger than 0.9 mm and more preferably larger than 1.5 mm, for example, and this improves the STL in a range from 5000 to 8000 Hz.

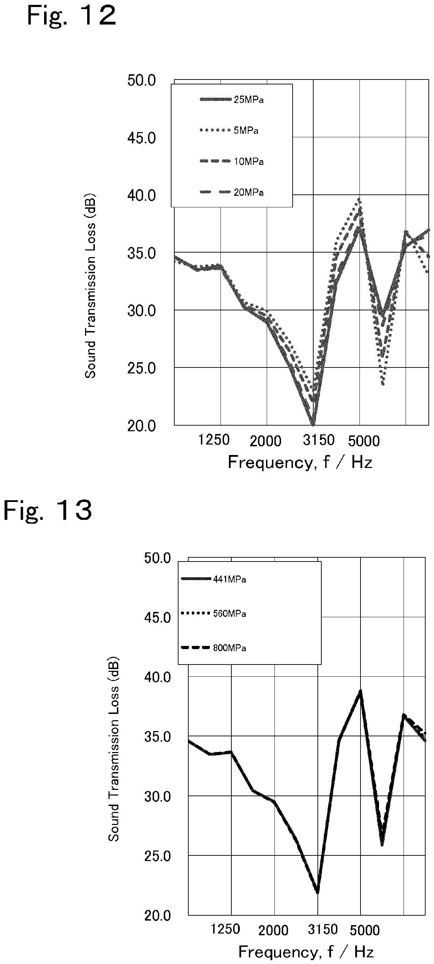

The inventors of the present invention also found that when the attachment angle of the laminated glass was increased and the Young's modulus of the core layer 31 was reduced, the sound insulation performance decreased near a frequency of 5000 to 8000 Hz. FIG. 12 is a graph showing a relationship between frequency and STL with respect to the core layers having varying Young's moduli when the attachment angle is 60 degrees, the outer glass sheet has a thickness of 2.0 mm, and the inner glass sheet has a thickness of 1. 5 mm. It can be seen from this figure that the smaller the Young's modulus of the core layer 31 is, the higher the STL is in a range from 2000 to 5000 Hz, but the STL decreases in a range from 5000 to 8000 Hz.

With respect to this, the inventors of the present invention found that the STL in a range from 5000 to 8000 Hz was improved by increasing the Young's moduli of the outer layers. FIG. 13 is a graph showing a relationship between frequency and STL when the attachment angle is 60 degrees and the core layer 31 has a Young's modulus of 10 MPa (frequency of 100 Hz, temperature of 20°C). This graph shows the results in the case where three types of laminated glasses in which the Young's modulus of the core layer 31 was 10 MPa and the Young's moduli of the outer layers 32 varied were prepared. That is, the outer layers 32 had respective thicknesses of 441 MPa, 560 MPa, and 800 MPa. As a result, in a range from 2000 to 5000 Hz, the laminated glass in which the outer layers have large Young's moduli has the lowest STL, but does not greatly differ from the other laminated glasses. On the other hand, in a range from 5000 to 8000 Hz, the laminated glass in which the outer layers 32 have large Young's moduli has the highest STL.

It was found from this viewpoint that when the attachment angle is a large angle of 45 degrees or more, it is preferable that the Young's moduli of the outer layers 32 are large, that is, the Young's moduli of the outer layers 32 are preferably 560 MPa or more, for example, and this improves the STL in a range of 5000 to 8000 Hz even when the core layer 31 has a small Young's modulus of 1 to 25 MPa, for example.

Examples

Hereinafter, examples of the present invention will be described. However, the present invention is not limited to the examples below.

1. Evaluation of thickness of outer glass sheet

First, the thicknesses of outer glass sheets were evaluated. Here, seven laminated glasses listed below were prepared. The laminated glasses are each constituted by an outer glass sheet, an inner glass sheet, and an interlayer that is sandwiched between these glass sheets. The core layer and each outer layer of the interlayer had respective thicknesses of 0.1 mm and 0.33 mm and respective Young's moduli of 10 MPa and 441 MPa (20°C, 100 Hz).

Table 1

|  | Outer glass sheet | Inner glass position |
|---|---|---|
| Laminated glass 1 | 2.1 mm | 2.1 mm |
| Laminated glass 2 | 2.1 mm | 1.6 mm |
| Laminated glass 3 | 2.1 mm | 1.3 mm |
| Laminated glass 4 | 2.1 mm | 1.0 mm |
| Laminated glass 5 | 2.0 mm | 1.3 mm |
| Laminated glass 6 | 1.8 mm | 1.3 mm |
| Laminated glass 7 | 1.6 mm | 1.6 mm |

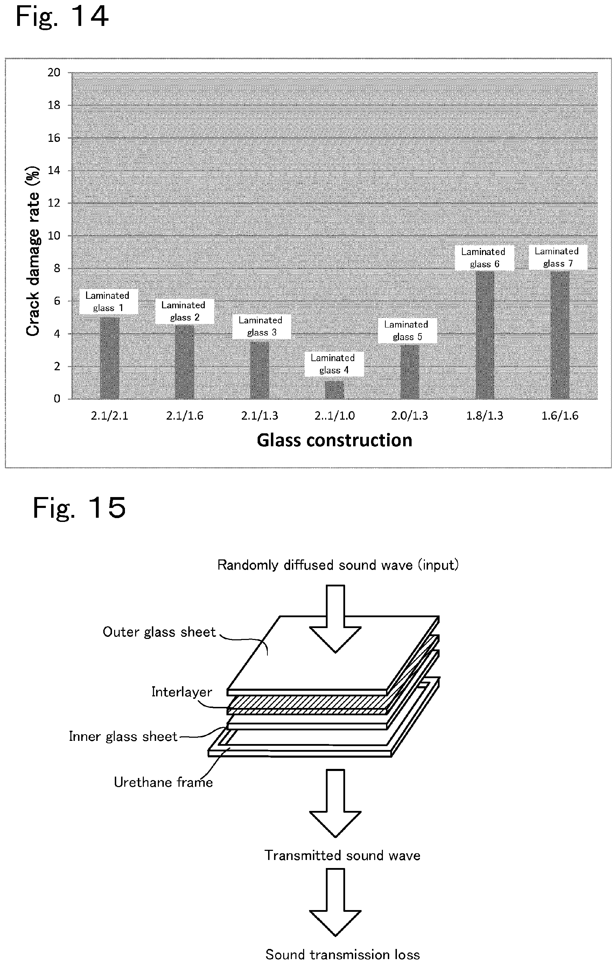

Each of the above-mentioned laminated glasses was arranged at an angle of 60 degrees to the vertical, and granite having an average particle size of about 5 to 20 mm was caused to collide with the laminated glass at a speed of 64 km per hour. Thirty pieces of granite were caused to collide with each laminated glass, and the rate of occurrence of cracking was calculated. The results are as shown in FIG. 14. As shown in this figure, the rate of occurrence of cracking of the laminated glasses 1 to 5 whose outer glass sheets had a thickness of 2.0 mm or more was 5% or less regardless of the thickness of the inner glass sheet. On the other hand, the rate of occurrence of cracking of the laminated glasses 6 and 7 whose outer glass sheets had a thickness of 1.8 mm or less was 8% regardless of the thickness of the inner glass. Accordingly, from the viewpoint of impact resistance with respect to flying objects, the thickness of the outer glass sheet is preferably 1.8 mm or more as mentioned above, and more preferably 2.0 mm or more.

2. Simulation method with respect to sound transmission loss

With respect to examples and comparative examples below, the sound transmission loss was evaluated by simulation. The simulation conditions are as described below. It should be noted that this simulation method is also used in the above-described embodiment.

First, the simulation was performed using a piece of acoustic analysis software (ACTRAN manufactured by Free Field Technologies). This software is capable of calculating the sound transmission loss (transmitted sound pressure level/incident sound pressure level) of a laminated glass by solving the following wave equation using the finite element method.
Formula 2

General wave equation

$$\frac{\partial^2 \vec{u}}{\partial t^2} = \frac{K}{\rho} \frac{\partial^2 \vec{u}}{\partial x^2} \qquad c = \sqrt{\frac{K}{\rho}}$$

K: bulk modulus
p: density
c: phase velocity

Next, the calculation conditions will be described.

(1) Setting of model

FIG. 15 shows a model of the laminated glasses that were used in this simulation. This model defines a laminated glass in which an outer glass sheet, an interlayer, an inner glass sheet, and a urethane frame are stacked in this order from the sound source side. Here, the urethane frame was added to the model because the point that the presence or absence of a urethane frame is considered to have an influence in no small way on the results of calculation of the sound transmission loss and the point that a laminated glass is generally bonded with a urethane frame interposed between the laminated glass and a windshield of a vehicle were taken into account.

(2) Input conditions 1 (dimensions etc.)

Table 2

| Dimensions of both glass sheets | 800×500 mm |
|---|---|
| Thicknesses of both glass sheets | As described above |
| Configuration of interlayer | Three-layer structure of outer layer, core layer, and outer layer |
| Thickness of interlayer | As described above |
| Constraint condition | Lower surface of urethane frame is fixed and constrained. |
| Incidence condition of sound | Randomly diffused sound wave, plane wave |

It should be noted that the dimensions 800×500 mm of the glass sheets are smaller than the sizes that are used in actual vehicles. The larger the glass size is, the poorer the STL value tends to be. The reason for this is that the constrained area increases with the size, and accordingly the resonance mode increases. However, even if the glass size varies, the tendency of relative values with respect to the frequency, that is, the tendency of a laminated glass made of glass sheets having different thicknesses to be inferior to a laminated glass made of glass sheets having the same thickness in a predetermined frequency band is unchanged.
In the finite element method, meshes on the glass sheet were formed to have a rectangular parallelepiped shape with a side of 5 mm. Generally, it is said that when the side of a mesh is shorter than or equal to one sixth of the maximum wavelength to be analyzed, this method is performed with good accuracy. The side of 5 mm used herein corresponds to about one seventh of a wavelength at 10000 Hz, and therefore, accuracy of the simulation is guaranteed. Accordingly, it can be said that accuracy is guaranteed.
The randomly diffused sound wave in Table 2 above refers to such a sound wave that a sound wave having a predetermined frequency propagates with incident angles in every direction toward the outer glass sheet, and assumes a sound source in a reverberation chamber in which the sound transmission loss is measured. On the other hand, the plane wave, which is a wave having a wave surface orthogonal to the fixed traveling direction, refers to such a sound wave that a sound wave having a predetermined frequency is incident to the outer glass sheet at a right angle and propagates. It should be noted that the effect of the sound insulation performance can also be evaluated using the plane wave.

(3) Input conditions 2 (property values)

Table 3

|  | Young's modulus (MPa) | Loss factor (tan$\delta$) | Poisson's ratio | Density (Kg/m³) |
|---|---|---|---|---|
| Both glass sheets | 7160 | 0.01 to 0.02 | 0.23 | 2500 |
| Both outer layers | Shown in table below | Shown in table below | 0.49 | 1060 |
| Core layer | Shown in table below | Shown in table below | 0.49 | 1060 |
| Urethane frame | 10 | 0.01 | 0.45 | 2000 |

Regarding Young's moduli and loss factors of core layer and two outer layers
Different values were used for different main frequencies. The reason for this is that the core layer and the two outer layers are viscoelastic bodies, and therefore, the Young's moduli thereof exhibit strong frequency dependence due to the viscous effect. It should be noted that although the temperature dependence is also significant, the property values that assume a constant temperature (20°C) were used in this simulation.

Table 4

| Core layer | | | | Two outer layers | | |
|---|---|---|---|---|---|---|
|  | 20°C | | |  | 20°C | |
| f (Hz) | E (MPa) | tan$\delta$ | | f (Hz) | E (MPa) | tan$\delta$ |
| 100 | 19 | 1.00 | | 100 | 441 | 0.26 |
| 125 | 20 | 1.00 | | 125 | 453 | 0.25 |
| 160 | 21 | 1.00 | | 160 | 467 | 0.24 |
| 200 | 22 | 1.00 | | 200 | 480 | 0.23 |
| 250 | 23 | 1.00 | | 250 | 493 | 0.23 |
| 315 | 24 | 1.00 | | 315 | 507 | 0.22 |
| 400 | 25 | 1.00 | | 400 | 522 | 0.22 |
| 500 | 26 | 1.00 | | 500 | 537 | 0.21 |
| 630 | 27 | 1.00 | | 630 | 552 | 0.21 |
| 800 | 28 | 1.00 | | 800 | 569 | 0.21 |
| 1000 | 29 | 1.00 | | 1000 | 585 | 0.20 |
| 1250 | 30 | 1.00 | | 1250 | 601 | 0.20 |
| 1600 | 32 | 1.00 | | 1600 | 619 | 0.20 |
| 2000 | 33 | 1.00 | | 2000 | 636 | 0.20 |
| 2500 | 35 | 1.00 | | 2500 | 654 | 0.20 |
| 3150 | 36 | 1.00 | | 3150 | 673 | 0.20 |
| 4000 | 38 | 1.00 | | 4000 | 693 | 0.19 |
| 5000 | 40 | 1.00 | | 5000 | 712 | 0.19 |
| 6300 | 41 | 1.00 | | 6300 | 733 | 0.19 |
| 8000 | 43 | 1.00 | | 8000 | 754 | 0.19 |
| 10000 | 45 | 1.00 | | 10000 | 775 | 0.19 |

3. Evaluations with regard to depth of bend and difference in thickness between outer glass sheet and inner glass sheet

As described below, the difference in thickness between the outer glass sheet and the inner glass sheet, and the depth of bend were evaluated. As shown in Tables 5 and 6, laminated glasses according to examples and comparative examples were prepared. It should be noted that the core layer had a thickness of 1.0 mm, the outer layers each had a thickness of 0.33 mm, the core layer had a Young's modulus of 25 MPa, the outer layers each had a Young's modulus of 441 MPa, and the attachment angle was 0 degrees.

Table 5

|  | Ex. 1 | Ex. 2 | Ex. 3 | Comp. Ex. 1 | Comp. Ex. 2 | Comp. Ex. 3 | Comp. Ex. 4 | Comp. Ex. 5 | Comp. Ex. 6 |
|---|---|---|---|---|---|---|---|---|---|
| Outer glass sheet (mm) | 2.0 | 2.0 | 2.0 | 2.0 | 2.0 | 2.0 | 2.0 | 2.0 | 2.0 |
| Inner glass sheet (mm) | 1.5 | 1.5 | 1.5 | 1.5 | 1.5 | 1.0 | 1.0 | 1.0 | 1.0 |
| Difference in thickness (mm) | 0.5 | 0.5 | 0.5 | 0.5 | 0.5 | 1.0 | 1.0 | 1.0 | 1.0 |
| Depth of bend (mm) | 10 | 20 | 30 | 40 | 50 | 10 | 20 | 40 | 50 |

Table 6

|  | Ex. 4 | Ex. 5 | Ex. 6 | Ex. 7 | Ex. 8 | Ex. 9 | Ex. 10 | Ex. 11 | Ex. 12 |
|---|---|---|---|---|---|---|---|---|---|
| Outer glass sheet (mm) | 1.65 | 1.65 | 1.65 | 1.75 | 1.75 | 1.75 | 1.85 | 1.85 | 1.85 |
| Inner glass sheet (mm) | 1.35 | 1.35 | 1.35 | 1.25 | 1.25 | 1.25 | 1.15 | 1.15 | 1.15 |
| Difference in thickness (mm) | 0.3 | 0.3 | 0.3 | 0.5 | 0.5 | 0.5 | 0.7 | 0.7 | 0.7 |
| Depth of bend (mm) | 10 | 20 | 30 | 10 | 20 | 30 | 10 | 20 | 30 |

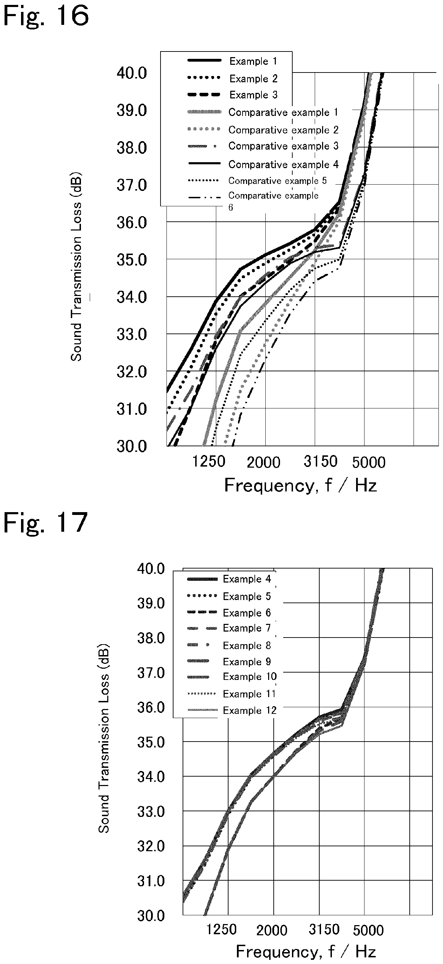

The results are as shown in FIGS. 16 and 17. First, as shown in FIG. 16, it can be seen from the results of Comparative Examples 1, 2, 5, and 6 that when the depth of bend increases, the STL decreases. In particular, it can be seen from the results of Comparative Examples 1 and 2 that when the depth of bend is large, the STL decreases even in the cases where the difference in thickness between the outer glass sheet and the inner glass sheet is small. Moreover, it can be seen from the results of Comparative Examples 3 and 4 that even in the cases where the depth of bend is small, when the difference in thickness between the outer glass sheet and the inner glass sheet is large, the STL decreases particularly in a range greater than or equal to 3000 Hz.

Moreover, it can be seen from FIG. 17 that when the depth of bend is small and the difference in thickness between the outer glass sheet and the inner glass sheet is small, the STL is generally high.

4. Evaluations with regard to thickness of core layer and difference in thickness between outer glass sheet and inner glass sheet

As described below, the difference in thickness between the outer glass sheet and the inner glass sheet, and the thickness of the core layer were evaluated. As shown in Table 7, laminated glasses according to examples and comparative examples were prepared. It should be noted that the outer layers each had a thickness of 0.33 mm, the core layer had a Young's modulus of 25 MPa, the outer layers each had a Young's modulus of 441 MPa, the depth of bend was 0 mm, and the attachment angle was 0 degrees.

Table 7

|  | Ex. 13 | Ex. 14 | Ex. 15 | Ex. 16 | Ex. 17 | Comp. Ex. 7 | Comp. Ex. 8 |
|---|---|---|---|---|---|---|---|
| Outer glass sheet (mm) | 2.0 | 2.0 | 2.0 | 2.2 | 2.5 | 2.0 | 2.0 |

(continued)

|  | Ex. 13 | Ex. 14 | Ex. 15 | Ex. 16 | Ex. 17 | Comp. Ex. 7 | Comp. Ex. 8 |
|---|---|---|---|---|---|---|---|
| Inner glass sheet (mm) | 1.50 | 1.50 | 1.50 | 1.3 | 1.0 | 1.50 | 1.50 |
| Difference in thickness (mm) | 0.5 | 0.5 | 0.5 | 0.9 | 1.5 | 0.5 | 0.5 |
| Thickness of core layer (mm) | 0.1 | 0.2 | 0.4 | 0.1 | 0.1 | 0.01 | 0.05 |

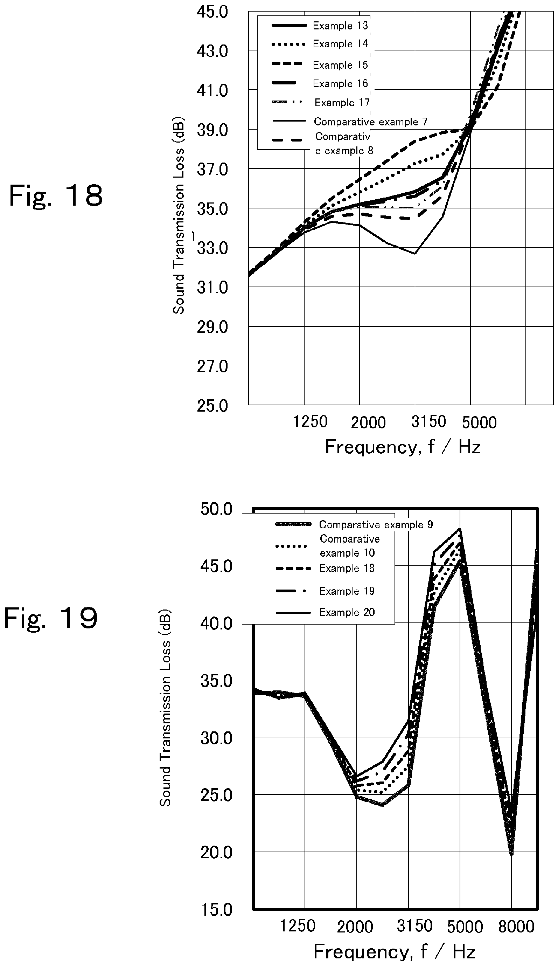

The results are as shown in FIG. 18. It can be seen from the results of Comparative Examples 7 and 8 that when the thickness of the core layer decreases, the STL decreases. On the other hand, when the thickness of the core layer increases, the STL generally increases. However, as is clear from the results of Examples 16 and 17, when the difference in thickness between the outer glass sheet and the inner glass sheet increases, the STL tends to decrease, and therefore, it is preferable that the difference in thickness between the outer glass sheet and the inner glass sheet is small.

5. Evaluations with regard to attachment angle and thickness of core layer

As described below, the attachment angle of the laminated glass and the thickness of the core layer were evaluated. As shown in Tables 8 to 10, laminated glasses according to examples and comparative examples were prepared. The outer glass sheet had a thickness of 2.0 mm, the inner glass sheet had a thickness of 1.5 mm, the outer layers each had a thickness of 0.33 mm, the core layer had a Young's modulus of 25 MPa, the outer layers each had a Young's modulus of 441 MPa, and the depth of bend was 0 mm. In Example 25 shown in Table 10, the two glass sheets had the same thickness.

Table 8

|  | Ex. 18 | Ex. 19 | Ex. 20 | Comp. Ex. 9 | Comp. Ex. 10 |
|---|---|---|---|---|---|
| Attachment angle (degree) | 45 | 45 | 45 | 45 | 45 |
| Thickness of core layer (mm) | 0.1 | 0.2 | 0.4 | 0.01 | 0.05 |

Table 9

|  | Ex. 21 | Ex. 22 | Ex. 23 | Comp. Ex. 11 | Comp. Ex. 12 |
|---|---|---|---|---|---|
| Attachment angle (degree) | 75 | 75 | 75 | 75 | 75 |
| Thickness of core layer (mm) | 0.1 | 0.2 | 0.4 | 0.01 | 0.05 |

Table 10

|  | Ex. 24 | Ex. 25 |
|---|---|---|
| Outer glass sheet (mm) | 2.0 | 1.75 |
| Inner glass sheet (mm) | 1.5 | 1.75 |
| Difference in thickness (mm) | 0.5 | 0 |
| Attachment angle (degree) | 60 | 60 |
| Thickness of core layer (mm) | 0.1 | 0.1 |

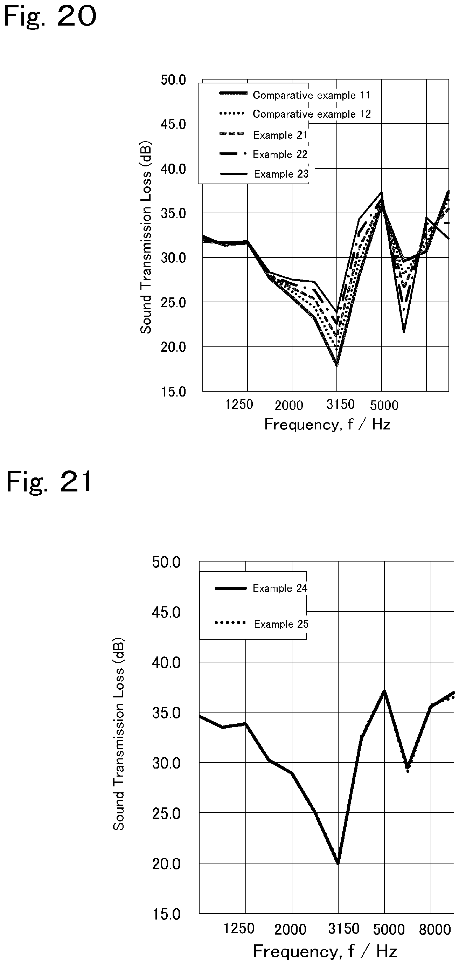

It can be seen from FIGS. 19 and 20 that even in the cases where the attachment angle is a large angle of 45 degrees or more, the larger the thickness of the core layer is, the higher the STL is. That is, it is found that the larger the thickness of the core layer is, the higher the STL is, in the same frequency range as the frequency range from 2000 to 5000 Hz (particularly near 3150 Hz) in which the STL decreases due to the attachment angle being increased as shown in FIG. 25. Moreover, it can be seen from FIG. 21 that even when the two glass sheets have the same thickness, the similar performance can be obtained.

6. Evaluations with regard to attachment angle and Young's modulus of core layer

As described below, the attachment angle of the laminated glass and the thickness of the core layer were evaluated. As shown in Table 11, laminated glasses according to examples and comparative examples were prepared. It should be noted that the outer glass sheet had a thickness of 2.0 mm, the inner glass sheet had a thickness of 1.5 mm, the core layer had a thickness of 0.1 mm, the outer layers each had a thickness of 0.33 mm, the outer layers each had a Young's modulus of 441 MPa, and the depth of bend was 0 mm.

Table 11

|  | Ex. 26 | Ex. 27 | Ex. 28 | Comp. Ex. 13 | Comp. Ex. 14 |
|---|---|---|---|---|---|
| Attachment angle (degree) | 60 | 60 | 60 | 60 | 60 |
| Young's modulus of core layer (MPa) | 10 | 20 | 25 | 30 | 40 |

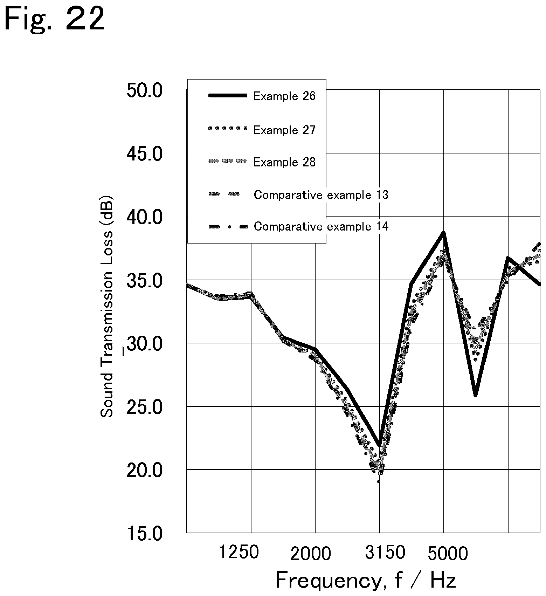

The results are as shown in FIG. 22. It can be seen that even in the cases where the attachment angle is a large angle of 45 degrees or more, the smaller the Young's modulus of the core layer is, the higher the STL is. That is, it can be seen that the smaller the Young's modulus of the core layer is, the higher the STL is, in the same frequency range as the frequency range from 2000 to 5000 Hz (particularly near 3150 Hz) in which the STL decreases due to the attachment angle being increased as shown in FIG. 25.

7. Evaluations with regard to attachment angle and depth of bend

As described below, the attachment angle and the depth of bend of the laminated glass were evaluated. As shown in Tables 12 and 13, laminated glasses according to examples and comparative examples were prepared. It should be noted that the outer glass sheet had a thickness of 2.0 mm, the inner glass sheet had a thickness of 1.5 mm, the core layer had a thickness of 0.1 mm, the outer layers each had a thickness of 0.33 mm, the core layer had a Young's modulus of 25 MPa, and the outer layers each had a Young's modulus of 441 MPa.

Table 12

|  | Ex. 29 | Ex. 30 | Ex. 31 | Comp. Ex. 15 | Comp. Ex. 16 | Comp. Ex. 17 |
|---|---|---|---|---|---|---|
| Attachment angle (degree) | 45 | 45 | 45 | 45 | 45 | 45 |
| Depth of bend (mm) | 0 | 10 | 20 | 30 | 40 | 50 |

Table 13

|  | Ex. 32 | Ex. 33 | Ex. 34 | Comp. Ex. 16 |
|---|---|---|---|---|
| Attachment angle (degree) | 0 | 30 | 30 | 45 |
| Depth of bend (mm) | 30 | 30 | 40 | 40 |

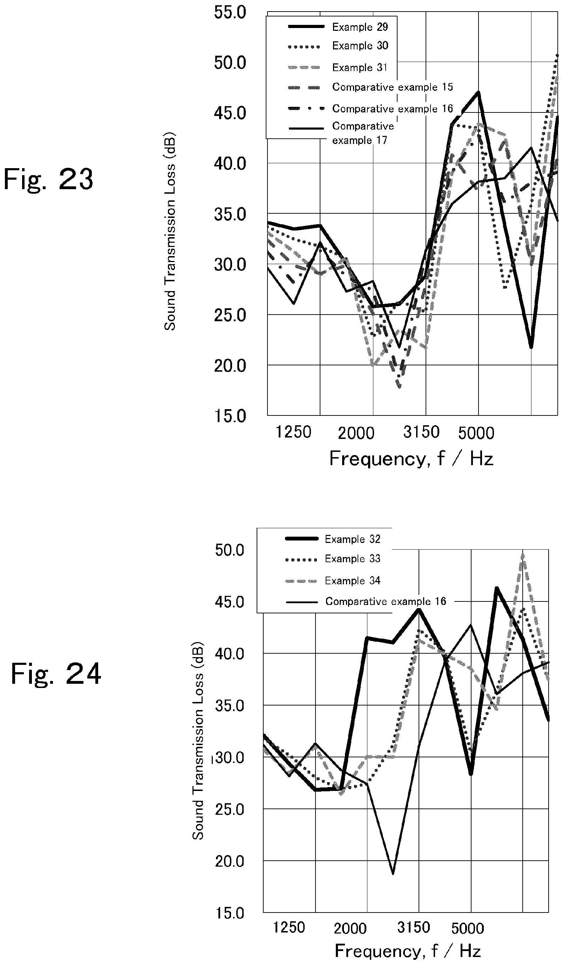

The results are as shown in FIGS. 23 and 24. First, it can be seen from FIG. 23 that in the cases where the depth of bend is 0 to 20 mm, when the attachment angle is 45 degrees or less, the STL is 20 dB or more in the entire frequency range. On the other hand, it can be seen that in the cases where the depth of bend is larger than 20 mm, even when the attachment angle is 45 degrees, the STL significantly decreases. For example, Comparative Examples 15 and 16 have a STL of less than 20 dB in a frequency range from 2000 to 3000 Hz, and Comparative Example 17 has the lowest STL in a frequency range from 3000 to 5000 Hz. Therefore, it is found that when the depth of bend is 0 to 20 mm, the attachment angle is preferably 0 to 45 degrees.

Moreover, it can be seen from FIG. 24 that as in Comparative Example 16, in the cases where the depth of bend is 40 mm, when the attachment angle is 45 degrees, the STL significantly decreases. Therefore, it is found that when the depth of bend is larger than 20 mm and 40 mm or less, the attachment angle is preferably 30 degrees or less.

Reference Signs List

1      Outer glass sheet
2      Inner glass sheet
3      Interlayer
31     Core layer
32     Outer layer

**Claims**

1. A laminated glass to be used in a windshield of an automobile, the laminated glass comprising:

   an outer glass sheet;
   an inner glass sheet arranged opposite to the outer glass sheet; and
   an interlayer sandwiched between the outer glass sheet and the inner glass sheet,
   wherein the interlayer includes at least a core layer and a pair of outer layers between which the core layer is sandwiched, the outer layers having a higher rigidity than that of the core layer,
   an attachment angle to the vertical with respect to the automobile is 45 degrees or more, and
   the core layer has a Young's modulus of 1 to 25 MPa at a frequency of 100 Hz and a temperature of 20°C.

2. The laminated glass according to claim 1, wherein the outer layers have a Young's modulus of 560 MPa or more at a frequency of 100 Hz and a temperature of 20°C.

3. The laminated glass according to claim 1 or 2, wherein the inner glass sheet has a thickness of 0.6 to 1.8 mm.

4. The laminated glass according to any one of claims 1 to 3, wherein the outer glass sheet has a thickness of 1.8 to 5.0 mm.

5. The laminated glass according to any one of claims 1 to 4, wherein the core layer has a thickness of 0.1 to 2.0 mm.

6. The laminated glass according to any one of claims 1 to 5, wherein the inner glass sheet has a smaller thickness than that of the outer glass sheet.

7. The laminated glass according to any one of claims 1 to 6, wherein the attachment angle is 60 degrees or more.

# Fig. 1

# Fig. 2

Fig. 3

(a)                                    (b)

Fig. 4

Fig. 5

S

Measurement position

Measurement position

Fig. 6

Fig. 7

Fig. 8

# Fig. 9

(a)

(b)

(c)

Fig. 10

Fig. 11

Fig. 12

Fig. 13

Fig. 14

Fig. 15

Fig. 16

Fig. 17

Fig. 18

Fig. 19

Fig. 20

Fig. 21

Fig. 22

Fig. 23

Fig. 24

Fig. 25

Fig. 26

## INTERNATIONAL SEARCH REPORT

International application No.

PCT/JP2015/072914

| A. CLASSIFICATION OF SUBJECT MATTER |
|---|
| *C03C27/12*(2006.01)i, *B60J1/00*(2006.01)i |

According to International Patent Classification (IPC) or to both national classification and IPC

| B. FIELDS SEARCHED |
|---|

Minimum documentation searched (classification system followed by classification symbols)
C03C27/12, B60J1/00

Documentation searched other than minimum documentation to the extent that such documents are included in the fields searched

| Jitsuyo Shinan Koho | 1922–1996 | Jitsuyo Shinan Toroku Koho | 1996–2015 |
| Kokai Jitsuyo Shinan Koho | 1971–2015 | Toroku Jitsuyo Shinan Koho | 1994–2015 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y | JP 2013-541484 A (Saint-Gobain Glass France),<br>14 November 2013 (14.11.2013),<br>claims; examples<br>& US 2012/0052274 A1<br>claims; examples<br>& WO 2012/025685 A1     & DE 202010008579 U1<br>& FR 2964100 A     & CN 202117506 U<br>& KR 10-2013-0140619 A | 1,3-7<br>6 |
| X<br>Y | WO 2013/181484 A1 (CORNING INC.),<br>05 December 2013 (05.12.2013),<br>claims; paragraphs [0023], [0049] to [0051],<br>[0064]<br>& JP 2015-525192 A<br>claims; paragraphs [0020], [0048] to [0051],<br>[0065]<br>& US 2015/0111016 A1 | 1-5,7<br>6 |

☒ Further documents are listed in the continuation of Box C.     ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 08 October 2015 (08.10.15) | 20 October 2015 (20.10.15) |

| Name and mailing address of the ISA/<br>Japan Patent Office<br>3-4-3,Kasumigaseki,Chiyoda-ku,<br>Tokyo 100-8915,Japan | Authorized officer<br><br>Telephone No. |
|---|---|

Form PCT/ISA/210 (second sheet) (July 2009)

## INTERNATIONAL SEARCH REPORT

International application No.

PCT/JP2015/072914

C (Continuation). DOCUMENTS CONSIDERED TO BE RELEVANT

| Category* | Citation of document, with indication, where appropriate, of the relevant passages | Relevant to claim No. |
|---|---|---|
| P,X | WO 2014/126251 A1 (Nippon Sheet Glass Co., Ltd.), 21 August 2014 (21.08.2014), claims; paragraphs [0063], [0064] & CN 104136391 A | 1-7 |
| P,X | WO 2015/041324 A1 (Nippon Sheet Glass Co., Ltd.), 26 March 2015 (26.03.2015), claims; paragraphs [0074], [0091] to [0096] (Family: none) | 1-7 |
| E,X | WO 2015/122507 A1 (Nippon Sheet Glass Co., Ltd.), 20 August 2015 (20.08.2015), claims; paragraphs [0272], [0289] to [0291] (Family: none) | 1-7 |

Form PCT/ISA/210 (continuation of second sheet) (July 2009)

**EP 3 181 534 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002326847 A